# EUROPEAN PATENT SPECIFICATION

(11) **EP 0 372 343 B1**
(45) Date of publication and mention of the grant of the patent: **19.01.2000**
(21) Application number: 89121845.5
(22) Date of filing: 27.11.1989
(51) Int. Cl.: C08K 3/04, C08L 25/00, C08J 9/04, C08J 9/16, C08J 11/06

(54) **Polystyrene foam containing carbon black**
Russ enthaltender Polystyrolschaum
Mousse de polystyrène contenant du noir de carbone

(30) Priority: 25.11.1988 US 275849
(43) Date of publication of application: 13.06.1990
(73) Proprietor: THE DOW CHEMICAL COMPANY, Midland, Michigan 48674 (US)
(72) Inventor: Romesberg, Floyd E., St. Louisville, Ohio 43071 (US); DeBenedictis, Mach A., Granville, Ohio 43023 (US)
(74) Representative: Casalonga, Axel

(56) References cited:
- FR-A- 2 111 525
- GB-A- 1 421 529
- GB-A- 1 583 627

## Description

This invention relates to improved styrenic polymer foam heat-insulating products and method of preparation. It also relates to a novel use for specific types of carbon black. It further relates to the use of scrap foam.

Styrene polymer foams have been used as heat-insulating products for decades. These commercial foams typically have closed cells (as determined by air pycnometer method in ASTM D-2856) in an amount of at least 95 percent, preferably at least 98 percent, and most preferably greater than 99.9 percent. The presence of open cells significantly reduces the insulating capability of the foam. No commercial heat-insulating styrenic foam has ever contained any carbon black.

Prior to 1959 it was stated that nucleating agents such as mica, carbon black, metal oxides, and talc could be used in the manufacture of styrenic and olefinic foams, (see U.S. Patent 3,072,584, assigned to The Dow Chemical Company). However, nucleating agents are ordinarily present in amounts of only about 0.2 weight percent.

Carbon black has been proposed since 1982 for use in electroconductive ethylenic foams for cushion-packaging of sensitive electronic equipment (see European Patent Application 0072536, assigned to Asahi-Dow Limited, published in 1982). However, ethylenic foams are not used for heat-insulating applications for reasons including the fact that ethylenic polymers are highly gas-permeable (and thereby permit the escape of the insulating gas within the cells). A heat-insulating foam would not be improved by making it electroconductive.

It has been proposed that fillers should be used in foams to reduce cost. However, carbon black typically costs more than polystyrene.

It has been speculated that the use of fillers (as a class) might affect the insulating capability of heat-insulating foams. However, the use of large amounts of carbon black in preparing olefinic foams tends to increase cell size and open cell content. Both of these effects are harmful to the insulating properties of the foams.

This invention arose as a result of experiments designed to give a better understanding of the probable effect of adding substantial amounts of different types of particulate material to the ingredients used in making styrenic foams.

A first aspect of the invention is a foam having resinous cell walls and a closed-cell content of at least 95 percent as determined by ASTM D-2856, in which the resin is a thermoplastic synthetic resin having at least 60 weight percent of a polymerized alkenyl aromatic synthetic resin, based on total thermoplastic synthetic resin weight; characterized in that the cell walls contain from 1.0 to 25 weight percent, based on the weight of the thermoplastic synthetic resin, of a carbon black having a particle size of from 10 to 100 nanometers and a surface area of 10 to 1500 square meters per gram of carbon black, and wherein the foam has a k-factor less than the corresponding foam containing no carbon black, as determined by ASTM C 518-85.

A second aspect of the invention is the use of an expandable particle which when expanded is a substantially closed-cell foam particle comprising:
a) a blowing agent;
b) a thermoplastic synthetic resin having at least 60 weight percent of a polystyrene resin, based on total thermoplastic synthetic resin weight.
   According to the invention the expandable particle comprises
c) from 1.0, to 25 weight percent, based on the weight of the thermoplastic synthetic resin, of a carbon black having a particle size of from 10 to 100 nanometers, a surface area of 10 to 1500 square meters per gram of carbon black, and equal to or less than (i.e. ≤) 2 weight percent volatiles in the carbon black based on total carbon black weight, including volatiles.

A third aspect of the invention is a process for preparing loose-fill material having superior insulating properties, characterized by grinding scrap foam wherein the foam contains at least 1 percent by weight carbon black.

The foam may be in particulate form, generally the type used for molding, or extruded form, such as loose-fill packaging or dunnage material in various shapes, thin sheets from about one-eighth (1/8) inch (0.3 cm) thick to about one-half (1/2) inch (1.3 cm) thick or boards at least 1/2 inch (1.3 cm) thick, also called planks.

Preferably the foam is an extruded or molded plank having a minimal cross-sectional thickness of at least 1/2 inch (1.3 cm) and a minimal cross-sectional area of at least 6 square inches (39 cm²).

The present invention also contemplates the unexpanded particulate form which when expanded provides substantially closed-cell foam particles.

Surprisingly, the present invention decreases the k-factor (thermal conductivity) thus increasing the R-value (thermal resistance) of substantially closed-cell foams of polystyrene and copolymers having at least 60 weight percent polymerized styrene by copolymer weight.

In accordance with this invention, a variety of thermoplastic homopolymers, copolymers and polymer blends can contain the carbon black. These polymers are derived from one or more alkenyl aromatic compounds, including styrene, alpha-methylstyrene, nuclear methylstyrenes, nuclear ethylstyrenes, nuclear vinylxylenes, nuclear chlorostyrenes and nuclear bromostyrenes, with minor amounts of other readily polymerizable compounds such as alkyl methacrylates, alkyl acrylates, acrylonitrile, maleic anhydride and rubber reinforced (either natural or synthetic) styrene polymers. For the purpose of convenience, these polymers, copolymers, interpolymers and polymer blends are referred to as "styrene polymers" and contain in chemically combined form, at least 60 percent by weight of at least one alkenyl aromatic compound, preferably styrene.

The blowing agents which can be used in the present invention can be conventional chemical or physical blowing agents. This includes mixtures of chemical blowing agents, mixtures of physical blowing agents and mixtures of chemical and physical blowing agents. These blowing agents are compounds which are or become gases (physical blowing agent) or produce gases (chemical blowing agent) on heating or a reduction in pressure. These include aliphatic hydrocarbons containing 4-6 carbon atoms and halogenated hydrocarbons which boil at a temperature below the softening point of the polymer. Usually about 1-25% of physical blowing agent per 100 grams of polymer is incorporated prior to foaming. The preferred blowing agent systems are those illustrated in U.S. Patents 4,636,527 and 3,960,792.

Also when desired other additives, for example flame retardants, internal fast-cool agents, pigments and dyes, stabilizers, anti-lump agents, self-extinguishing agents, plasticizers and the like, can be included.

One method for preparing a low density small cell size extruded styrene polymer elongate foam body is taught in U.S. Patent No. 3,770,668. Other methods for preparing extruded foam include, but are not limited to U.S. Patent No. 3,751,377, 2,774,991 and 2,669,751. Unexpanded or expanded loose-fill packaging or dunnage particles can also be prepared by extrusion methods.

Other styrene polymer foam may be in the form of beads, granules or other particles convenient for expansion and molding operations. These styrene polymer particles can be produced by any of the known techniques, for example a suspension technique which gives a bead or pellet shaped product. These styrene polymer particles may be molded into many shapes, including a styrene polymer elongate foam body.

Both the extruded and the molded styrene polymer elongate foam bodies are useful as heat-insulating materials. However for insulation purposes the extruded styrene polymer elongate foam body is generally preferred.

The carbon blacks tested in the present invention are those commercially available. Table 1 lists characteristics of the carbon blacks.

**Table 1**

| Carbon Black Properties | | | | | |
|---|---|---|---|---|---|
| SAMPLE | Particle Size (Nanometers) | Surface Area (Square meters per gram) | Volatiles Content (%) | pH | DBPA* (Cubic Centimeters per 100 grams) |
| A | 15 | 1475 | 2.0 | 8.6 | 330 |
| B | 16 | 343 | 9.5 | 2.5 | 104 |
| C | 19 | 140 | 1.5 | 7.0 | 114 |
| D | 20 | 143 | 1.0 | 7.5 | 118 |
| E | 24 | 138 | 5.0 | 3.0 | 55 |
| F | 30 | 254 | 1.5 | 5.0 | 178 |
| G | 31 | 70 | 1.4 | 7.0 | 72 |
| H | 36 | 46 | 1.0 | 7.0 | 60 |
| I | 65 | 30 | 1.0 | 8.3 | 75 |
| J | 75 | 25 | 0.5 | 8.5 | 70 |

| | | | | | |
|---|---|---|---|---|---|
| *DBPA-Dibutyl phthalate absorption | | | | | |

### EXAMPLES 12-45 and CONTROL EXAMPLES 1-11 (MOLDED FOAM)

Expandable polystyrene strand cut particles are produced in a 1 1/4 inch (3 cm) barrel diameter extruder with a mixing section. The maximum temperature in the extruder is about 200 degrees Fahrenheit (F) (95°C) with a die temperature of about 145°F (65°C). The pressure at the die is in a range of about 100-150 psig (800-1150 kPa). All expandable particles contain about 5% carbon black by weight of the polystyrene. The carbon black is added as a polystyrene and carbon black concentrate in an amount to achieve 5% loading of carbon black in the strand cut particles. Trichlorofluoromethane is used as a blowing agent in an amount of about 10 parts per hundred parts of polystyrene. Also added are calcium stearate in an amount of about 0.07 parts per hundred parts of polystyrene and hexabromocyclododecane in an amount of about 1.7 parts per hundred parts of polystyrene. After the strand leaves the extruder, it is cooled to allow the strand to be chopped into particles.

In another step the particles are annealed to control cell size. The particles are heated in a water bath at about 60 degrees centigrade for about 30 minutes, cooled in cold tap water for about 15 minutes, dried and prefoamed for about 30-150 seconds. The expanded beads are then air dried for 24-48 hours. The prefoamed particles are then molded with 7 psig (48 kPag) steam for about 120-150 seconds to produce a 6 inch by 6 inch by 1 inch (15 x 15 x 2.5 cm) molded shape.

The thermal conductivity (k-factor) of the molded foam is then determined at forty days after molding by interpolation of numerous testings from five to fifty days for various molded samples (approximately 6 x 6 x 1 inches (15 x 15 x 2.5 cm)) and the results are presented in Table 2. The k-factor testing uses the ASTM designated standard test method C 518-85, with a mean test temperature of 75°F (24°C): and a "Delta" 50'' of ± 25°F (14°C), and according to ASTM C 1058, Table II guidelines.

The k-factor test covers the measurement of steady state thermal transmission through flat slab specimens using a heat flow meter apparatus.

For all the following tables, for comparison purposes, examples of the present invention are compared against control examples based on the following criteria: (a) the cell size differential between the example and the control example is less than about 0.10 millimeter; (b) the density differential between the example and the control example is less than about 0.15 pounds per cubic foot (2.4 kg/m³); and (c) the blowing agent amount differential used in making the foam is less than about 1.5 parts per hundred.

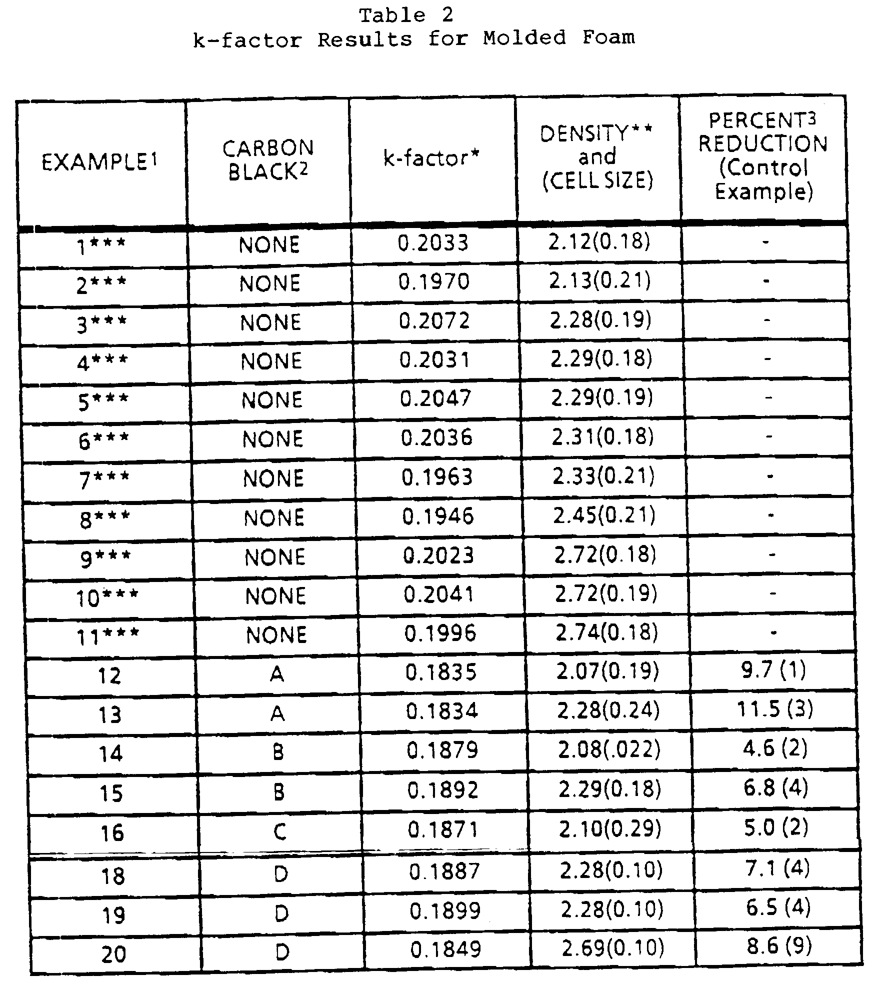

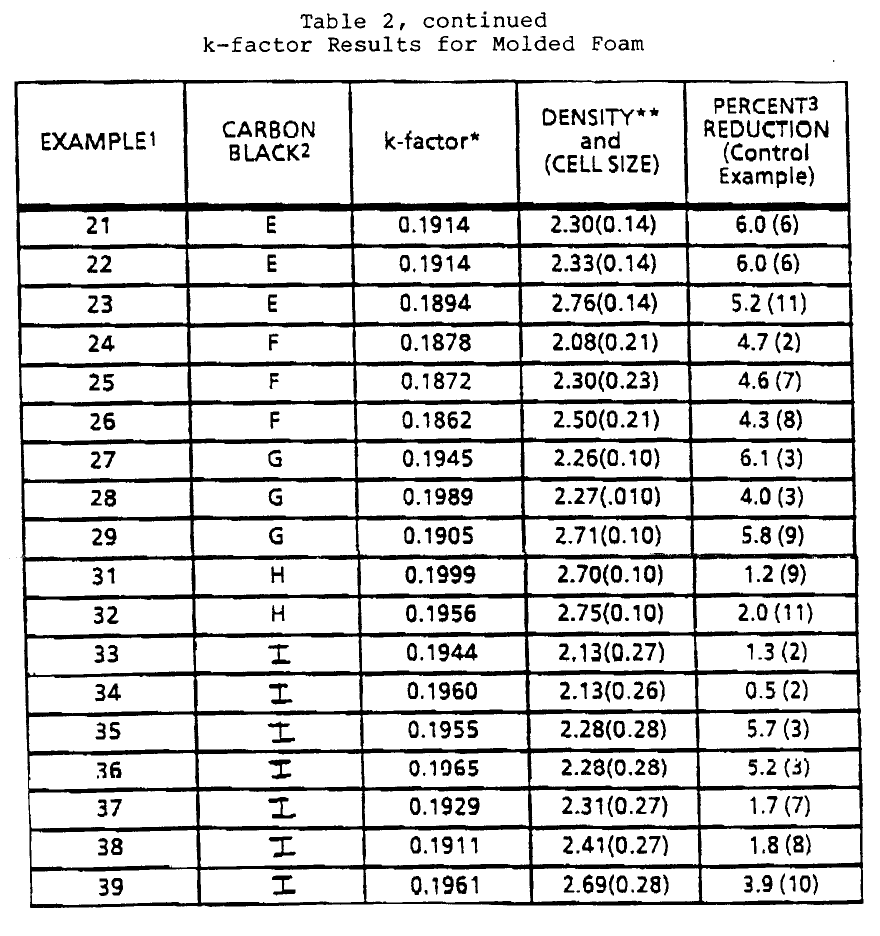

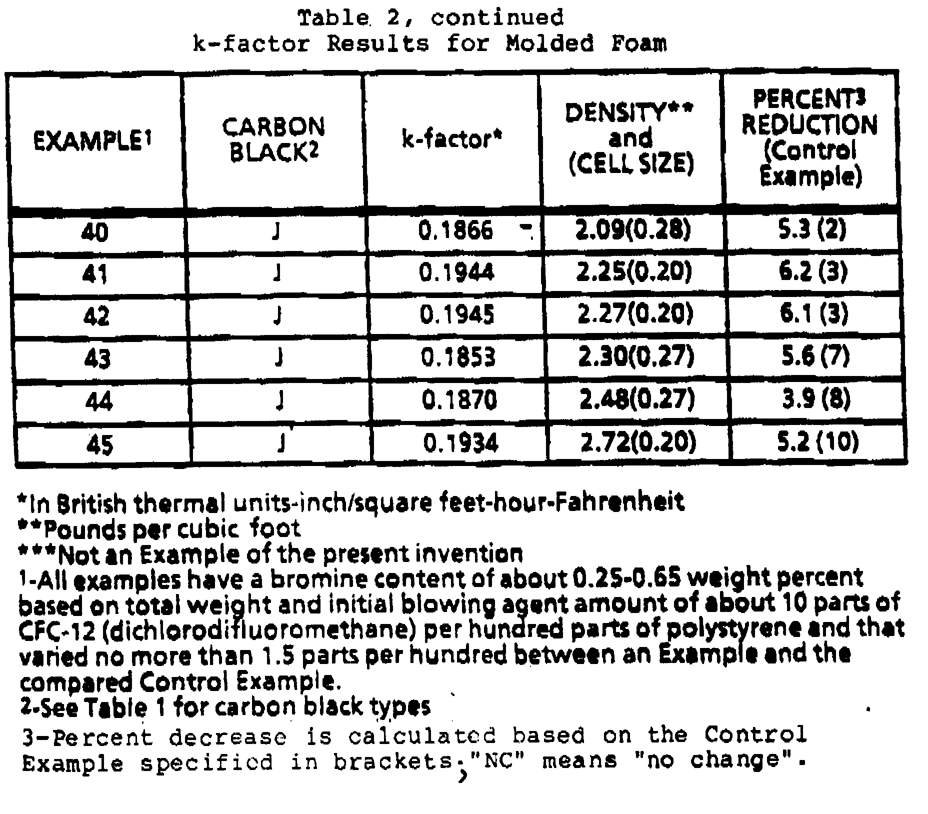

As can be seen in Table 2, the Examples of the present invention have a decreased k-factor, as compared to the Control Examples (1-11).

Preferably the decrease in k-factor is at least three percent as compared to a control example containing no carbon black.

### EXAMPLES 47-48 and COMPARATIVE EXAMPLE 46 (GROUND FOAM)

More expandable polystyrene strand cut particles are produced utilizing an extruder with a mixing section. A blowing agent (12 parts per hundred of trichlorofluoromethane, based on resin weight) and a polystyrene having a molecular weight (Mw) of about 186,000 are used. Carbon black is added to achieve the desired carbon black level using a concentrate of polystyrene and carbon black with thirty percent of the concentrate being carbon black. The particles are then expanded three times with 24 hours aging period between each expansion. The expansions use a steam bath with the three separate expansion times being about 1.5 minutes, 2 minutes and 1.5 minutes respectively. These expanded particles are then ground and the ground material is placed in a box 8 by 8 by 1 inches (20 x 20 x 2.5 cm) with 0.0003 inch (0.008 mm) thick polyethylene film used to hold the ground expanded particles in the box for k-factor testing. The weight amount of carbon black by weight of the polystyrene is indicated in Table 3. The density of the ground foam was about 0.3 pounds per cubic foot (4.8 kg/m³). The average cell size was about 0.4-0.5 millimeters.

**Table 3**

| k-factor Results for Ground Foam | | | | |
|---|---|---|---|---|
| EXAMPLE¹ | CARBON BLACK² | AMOUNT OF CARBON BLACK | k-factor* | PERCENT** DECREASE (k-factor) |
| 46*** | NONE | NONE | 0.33 | - |
| 47 | I | 10 | 0.26 | 21.2 (46) |
| 48 | I | 20 | 0.24 | 27.3 (46) |

| | | | | |
|---|---|---|---|---|
| *In British thermal units-inch/square feet-hour-Fahrenheit | | | | |
| **Percent decrease is calculated based on the k-factor of Control Example 46 | | | | |
| ***Not on example of the present invention | | | | |
| ¹-All examples have a cell size of about 0.4-0.5 millimeters and a density of about 0.3 pounds per cubic foot | | | | |
| ²-See Table 1 for carbon black type | | | | |

As can be seen by looking at the percent decrease in k-factor in Examples 47 and 48, the introduction of carbon black has a substantial effect on k-factor.

### EXAMPLES 62-87 and COMPARATIVE EXAMPLES 49-61 (EXTRUDED FOAM)

Extruded polystyrene boards are produced in a 2.5 inch (6.5 cm) barrel diameter extruder with a mixing section. The examples contain varying amounts by weight of carbon black by weight of the polystyrene with the carbon black added using a concentrate of polystyrene and carbon black with thirty percent of the concentrate being carbon black. For some Examples a dichlorodifluoromethane/methyl chloride blowing agent mixture is used. For other Examples a dichlorofluoromethane/carbon dioxide/ethyl chloride blowing agent mixture is used.

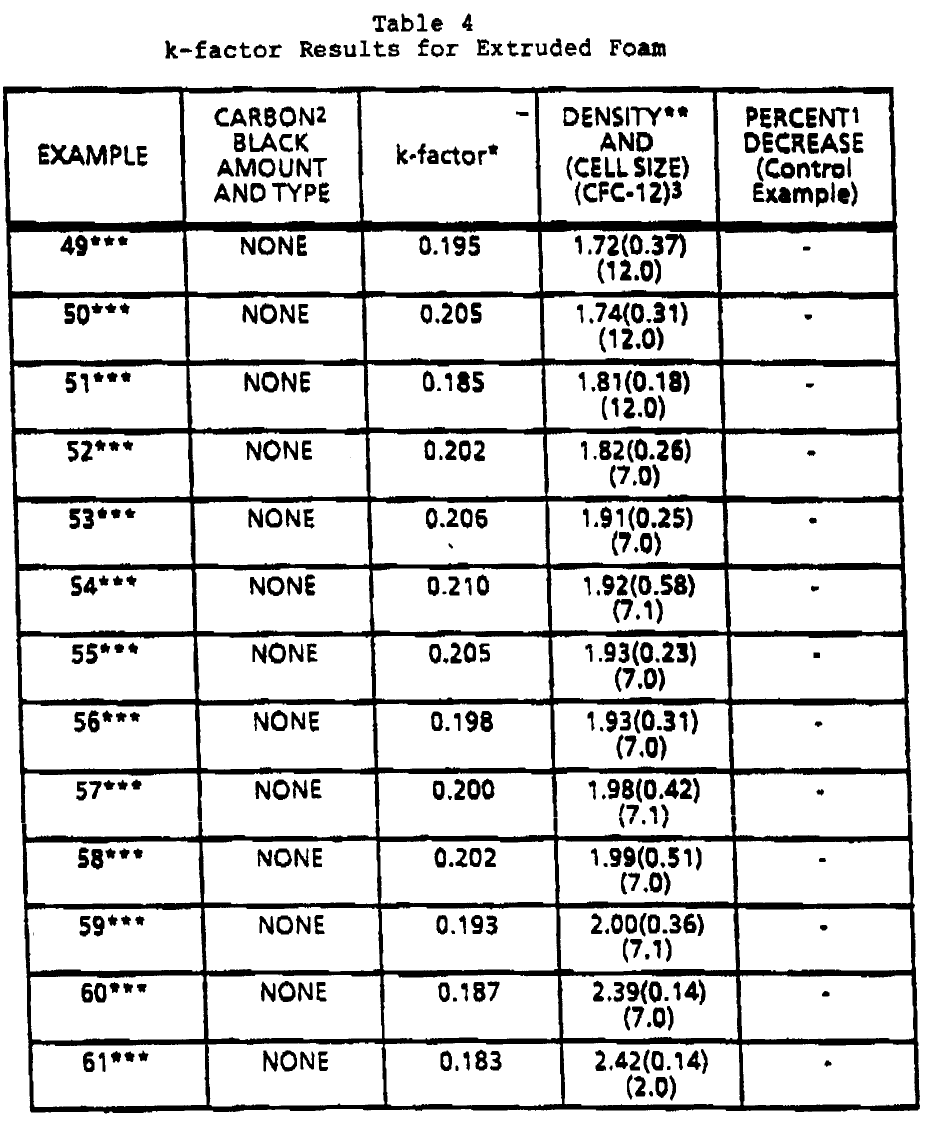

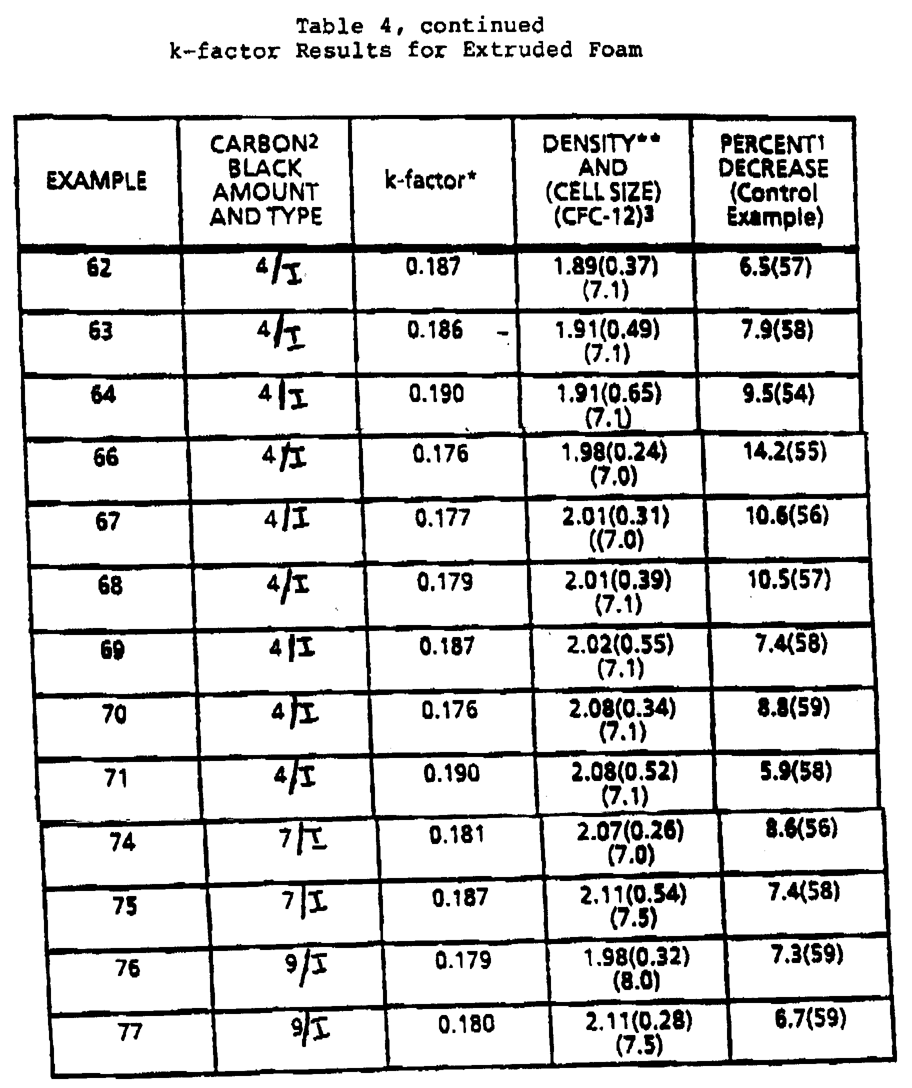

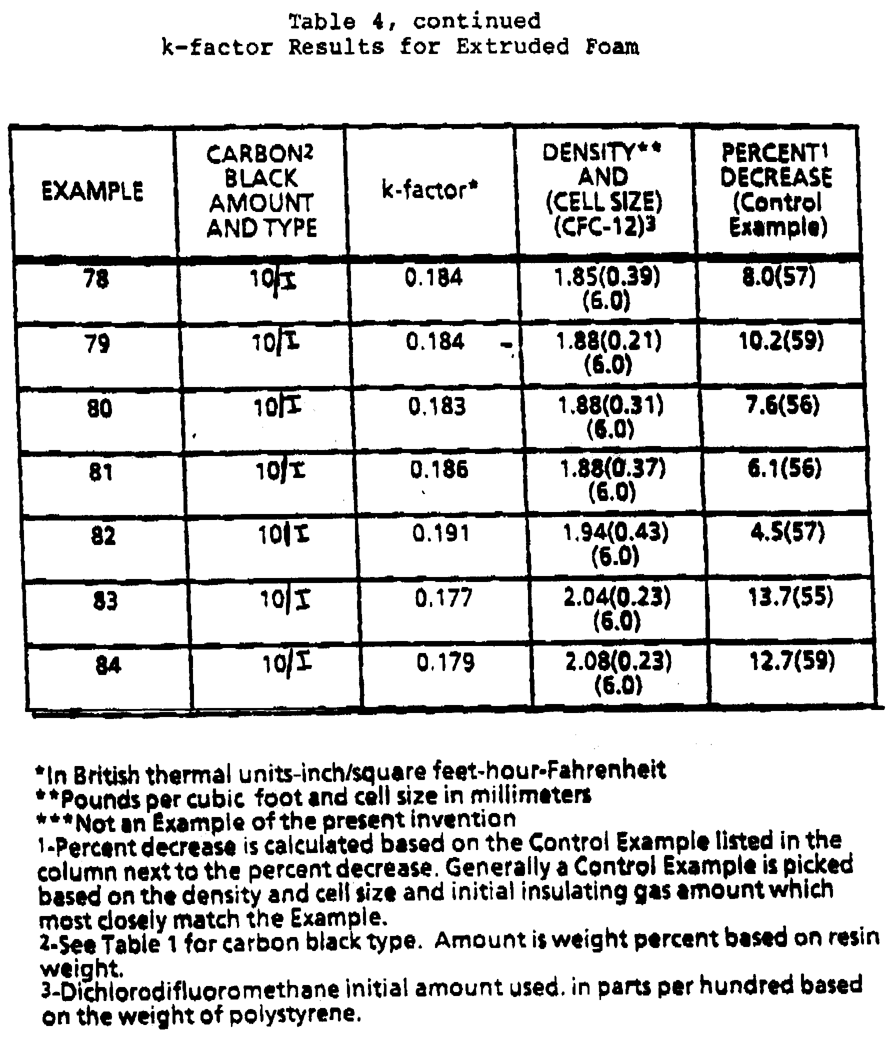

As can be seen by looking at Table 4, the k-factor can be decreased substantially by the introduction of carbon black into the substantially closed-cell extruded polystyrene foam. While cell size, (insulating) blowing agent amount and density have an effect on k-factor, as seen by comparing Control Examples, it is evident by looking at Table 4 that when cell size, blowing agent amount and density are about equal for a given Control Example and Example (57 versus 68, for example), the introduction of as little as four percent of a carbon black having required size and surface area will decrease the k-factor by at least four percent, and specifically in Example 68 versus 57 the k-factor is decreased by 10.5 percent.

### EXAMPLES 90-93 and COMPARATIVE EXAMPLES 88-89 (EXTRUDED FOAM)

A further series of experiments was run to make extruded polystyrene foam with a 2.5 inch (6.5 cm) extruder. The following additives and their levels were used to make the foams, based on the weight of polystyrene resin.
Carbon Black (Type I):- 0, 4, and 10 weight percent
Talc: 0 to 0.20 weight percent
Calcium stearate: 0 to 0.20 weight percent
Magnesium oxide: 0 to 0.10 weight percent
Polyethylene: 0 to 2.0 weight percent
Hexabromocyclodecane: 0 to 2.0 weight percent
1,1-difluoro-1-chloroethane: 6 to 10 weight percent
Ethyl chloride: 1.5 to 4.5 weight percent
Carbon dioxide: 0.5 to 1.5 weight percent.

The use of the magnesium oxide is to activate the fire retardant additive, hexabromocyclodecane (HBCD). Talc, calcium stearate and polyethylene were all used as cell size control agents.

The experimental work showed that open cells could be eliminated by maintaining the foaming temperature below 128° Centrigrade, even when using 10 weight percent carbon black, along with judicious choice of blowing agent level.

The products made with carbon black had slightly higher densities than those made without carbon black. All densities (as measured without skins at 12 hours of age and determined by the conventional "buoyant force" method) fell within the range of from 1.98 to 2.37 pounds per cubic foot (31.7 to 38.0 kg/m³).

Testing of the products for k-factor showed that use of 10 percent by weight carbon black reduced the k-factor for freshly made foam by about 15 percent (from about 0.155 to 0.131 British Thermal Units - inch/square foot-hour-degrees Fahrenheit for foam tested 1 hour after being made).

The foregoing results suggest that the k-factor of the foam after being aged for several years would be lower (and therefore better) than any styrenic foams previously made.

## Claims

1. A foam having resinous cell walls and a closed-cell content of at least 95 percent as determined by ASTM D-2856, in which the resin is a thermoplastic synthetic resin having at least 60 weight percent of a polymerized alkenyl aromatic synthetic resin, based on total thermoplastic synthetic resin weight; characterized in that the cell walls contain from 1.0 to 25 weight percent, based on the weight of the thermoplastic synthetic resin, of a carbon black having a particle size of from 10 to 100 nanometers and a surface area of 10 to 1500 square meters per gram of carbon black; and wherein the foam has a k-factor less than the corresponding foam containing no carbon black, as determined by ASTM C 518-85.

2. A substantially closed-cell foam, as claimed in Claim 1, wherein the carbon black is present in an amount from 1.5 to 10 weight percent.

3. A substantially closed-cell foam, as claimed in Claim 1, wherein the foam is an extruded plank having a minimal cross-sectional thickness of at least 1/2 inch (1.3 cm) and a minimal cross-sectional area of at least 6 square inches (39 cm²).

4. A substantially closed-cell foam, as claimed in Claim 3, wherein the extruded plank has a density of less than 3 pounds per cubic foot (48 kg/m³) and an average cell size through the minimal cross-sectional thickness direction from 0.05 to 2.0 millimeters.

5. A substantially closed-cell foam, as claimed in Claim 1, wherein the foam is expanded particles.

6. A substantially closed-cell foam, as claimed in Claim 1, wherein the foam is molded expanded particles.

7. A substantially closed-cell foam, as claimed in Claim 6, wherein the foam is a plank of molded expanded particles having a minimal cross-sectional thickness of at least 1/2 inch (1.3 cm) and a minimal cross-sectional area of at least 8 square inches (52 cm²).

8. Use of heat-expandable particles in an application for preparing a heat-insulation foam by expanding the expandable particles to form expanded particles and molding the expanded particles to form the heat-insulation form consisting of molded expanded particles, the expandable particles including
a) a blowing agent; and
b) a thermoplastic synthetic resin having at least 60 weight percent of a polystyrene, based on total thermoplastic synthetic resin weight;
CHARACTERIZED IN THAT
the heat-expandable particles comprise
c) from 1.0 to 25 weight percent, based on the weight of the thermoplastic synthetic resin, of a carbon black having a particle size of from 10 to 100 nanometers, a surface area of 10 to 1500 square meters per gram of carbon black, and equal to or less than (≤) 2 weight percent volatiles in the carbon black based on total carbon black weight, including volatiles.

9. Use of an expandable particle, as claimed in Claim 8, wherein the carbon black is present in an amount from 1.5 to 10 weight percent.

10. A process for preparing loose-fill material having superior insulating properties, characterized by grinding scrap foam wherein the foam consists of a foam according to claims 1 or 2.

## Patentansprüche

1. Schaum mit harzartigen Zellwänden und einem Gehalt an geschlossenen Zellen von wenigstens 95 %, bestimmt nach ASTM D-2856, in welchem das Harz ein thermoplastisches synthetisches Harz ist, das wenigstens 60 Gew.-% eines polymerisierten alkenylaromatischen synthetischen Harzes, bezogen auf Gesamtgewicht des thermoplastischen synthetischen Harzes, hat, dadurch gekennzeichnet, daß die Zellwände von 1,0 bis 25 Gew.-%, bezogen auf das Gewicht des thermoplastischen synthetischen Harzes, eines Rußes enthalten, der eine Teilchengröße von 10 bis 100 Nanometer und eine Oberfläche von 10 bis 1500 Quadratmeter pro Gramm Ruß hat, und daß der Schaum einen k-Faktor geringer als der entsprechende Schaum, der keinen Ruß enthalt, hat, bestimmt nach ASTM C 518-85.

2. Im wesentlichen geschlossenzelliger Schaum nach Anspruch 1, bei welchem der Ruß in einer Menge von 1,5 bis 10 Gew.-% vorhanden ist.

3. Im wesentlichen geschlossenzelliger Schaum nach Anspruch 1, bei welchem der Schaum eine extrudierte Platte ist, die eine minimale Querschnittsdicke von wenigstens 1/2 Zoll (1,3 cm) und eine minimale Querschnittsfläche von wenigstens 6 Quadratzoll (39 cm²) hat.

4. Im wesentlichen geschlossenzelliger Schaum nach Anspruch 3, bei welchem die extrudierte Platte eine Dichte von weniger als 3 Pounds per cubic foot (48 kg/m³) und eine Durchschnittszellgröße durch die Richtung der minimalen Querschnittsdicke von 0,05 bis 2,0 Millimeter hat.

5. Im wesentlichen geschlossenzelliger Schaum nach Anspruch 1, bei welchem der Schaum expandierte Teilchen sind.

6. Im wesentlichen geschlossenzelliger Schaum nach Anspruch 1, bei welchem der Schaum geformte expandierte Teilchen sind.

7. Im wesentlichen geschlossenzelliger Schaum nach Anspruch 6, bei welchem der Schaum eine Platte von geformten expandierten Teilchen ist, die eine minimale Querschnittsdicke von wenigstens 1/2 Zoll (1,3 cm) und eine minimale Querschnittsfläche von wenigstens 6 Quadratzoll (39 cm²) hat.

8. Verwendung von durch Wärme expandierbaren Teilchen bei einer Anwendung zur Herstellung von Wärmeisolationsschaum durch Expandieren der expandierbaren Teilchen zur Bildung von expandierten Teilchen und Formen der expandierten Teilchen zur Bildung des Wärmeisolationsschaums, der aus geformten expandierten Teilchen besteht, wobei die expandierbaren Teilchen einschließen:
a) ein Blähmittel, und
b) ein thermoplastisches synthetisches Harz, das wenigstens 60 Gew.-% eines Polystyrols, bezogen auf Gesamtgewicht des thermoplastischen synthetischen Harzes, hat,
dadurch gekennzeichnet, daß
die durch Wärme expandierbaren Teilchen umfassen
c) von 1,0 bis 25 Gew.-%, bezogen auf das Gewicht des thermoplastischen synthetischen Harzes, eines Rußes, der eine Teilchengröße von 10 bis 100 Nanometer, eine Oberfläche von 10 bis 1500 Quadratmeter pro Gramm Ruß und gleich oder weniger als (≤) 2 Gew.-% flüchtige Bestandteile in dem Ruß, bezogen auf Gesamtrußgewicht einschließlich flüchtigen Bestandteilen, hat.

9. Verwendung eines expandierbaren Teilchens, wie in Anspruch 8 beansprucht, bei welchem der Ruß in einer Menge von 1,5 bis 10 Gew.-% vorhanden ist.

10. Verfahren zur Herstellung von Losefüllmaterial, das überlegene Isoliereigenschaften hat, dadurch gekennzeichnet, daß Abfallschaum, der aus einem Schaum entsprechend Anspruch 1 oder 2 besteht, gemahlen wird.

## Revendications

1. Mousse dans laquelle les parois des alvéoles sont en résine et où il y a au moins 95 % d'alvéoles fermées (teneur mesurée par la méthode indiquée dans la norme ASTM D-2856), ladite résine étant une résine synthétique thermoplastique comportant au moins 60 %, en poids rapporté au poids total de résine synthétique thermoplastique, d'une résine synthétique de composé alcényl-aromatique polymérisé, laquelle mousse est caractérisée en ce que les parois des alvéoles contiennent de 1,0 à 25 %, en poids rapporté au poids de résine synthétique thermoplastique, d'un noir de carbone dont les particules ont une taille de 10 à 100 nanomètres et dont l'aire spécifique vaut de 10 à 1500 mètres carrés par gramme de noir de carbone, le facteur k de cette mousse, déterminé selon la norme ASTM C 518-85, étant inférieur à celui d'une mousse correspondante ne contenant pas de noir de carbone.

2. Mousse ne contenant pratiquement que des alvéoles fermées, conforme à la revendication 1, dans laquelle il y a de 1,5 à 10 % en poids de noir de carbone.

3. Mousse ne contenant pratiquement que des alvéoles fermées, conforme à la revendication 1, laquelle mousse constitue un panneau extrudé dont la section transversale présente une épaisseur minimale d'au moins 1,3 cm (0,5 pouce) et une aire minimale d'au moins 39 cm² (6 pouces carrés).

4. Mousse ne contenant pratiquement que des alvéoles fermées, conforme à la revendication 3, dans laquelle la masse volumique du panneau extrudé vaut moins de 48 kg/m³ (3 livres par pied cube) et la taille moyenne des alvéoles, dans la direction de plus petite épaisseur de la section transversale, vaut de 0,05 à 2,0 mm.

5. Mousse ne contenant pratiquement que des alvéoles fermées, conforme à la revendication 1, laquelle mousse est constituée de particules expansées.

6. Mousse ne contenant pratiquement que des alvéoles fermées, conforme à la revendication 1, laquelle mousse est constituée de particules expansées et moulées.

7. Mousse ne contenant pratiquement que des alvéoles fermées, conforme à la revendication 6, laquelle mousse constitue un panneau de particules expansées et moulées dont la section transversale présente une épaisseur minimale d'au moins 1,3 cm (0,5 pouce) et une aire minimale d'au moins 52 cm² (8 pouces carrés).

8. Emploi de particules expansibles à chaud dans une application de préparation de mousse thermiquement isolante, par expansion des particules expansibles pour former des particules expansées et moulage de ces particules expansées pour former une mousse thermiquement isolante constituée de particules expansées et moulées, les particules expansibles contenant :
a) un agent d'expansion; et
b) une résine synthétique thermoplastique constituée d'un polystyrène pour au moins 60 %, en poids rapporté au poids total de résine synthétique thermoplastique,
caractérisé en ce que les particules expansibles à chaud contiennent
c) de 1,0 à 25 %, en poids rapporté au poids de résine synthétique thermoplastique, d'un noir de carbone dont les particules ont une taille de 10 à 100 nanomètres, dont l'aire spécifique vaut de 10 à 1500 mètres carrés par gramme de noir de carbone, et dont la teneur en matières volatiles est inférieure ou égale (≤) à 2 %, en poids rapporté au poids total du noir de carbone, y compris celui des matières volatiles.

9. Emploi, conforme à la revendication 8, d'une particule expansible dans laquelle le noir de carbone se trouve en une proportion de 1,5 à 10 % en poids.

10. Procédé de fabrication d'un matériau de garnissage en particules possédant la propriété d'être un très bon isolant, caractérisé en ce qu'on broie des déchets de mousse, la mousse étant une mousse conforme à la revendication 1 ou 2.
